(19) **Europäisches Patentamt / European Patent Office / Office européen des brevets**

(11) **EP 3 494 381 B1**

(12) **FASCICULE DE BREVET EUROPEEN**

(45) Date de publication et mention de la délivrance du brevet:
**20.05.2020 Bulletin 2020/21**

(51) Int Cl.:
**G01N 21/03** (2006.01) **G01N 21/3504** (2014.01)

(21) Numéro de dépôt: **17765222.9**

(86) Numéro de dépôt international:
**PCT/FR2017/052174**

(22) Date de dépôt: **03.08.2017**

(87) Numéro de publication internationale:
**WO 2018/024991 (08.02.2018 Gazette 2018/06)**

(54) **CAVITÉ D'ABSORPTION AVEC GUIDES D'ONDE D'ENTRÉE ET SORTIE POUR UN CAPTEUR BIOLOGIQUE OU CHIMIQUE**

ABSORPTIONSKAVITÄT MIT EINGANGS- UND AUSGANGSWELLENLEITERN FÜR EINEN BIOLOGISCHEN ODER CHEMISCHEN SENSOR

ABSORPTION CAVITY WITH INPUT AND OUTPUT WAVEGUIDES FOR A BIOLOGICAL OR CHEMICAL SENSOR

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **04.08.2016 FR 1657567**

(43) Date de publication de la demande:
**12.06.2019 Bulletin 2019/24**

(73) Titulaire: **Commissariat à l'Energie Atomique et aux Energies Alternatives 75015 Paris (FR)**

(72) Inventeurs:
• **BOUTAMI, Salim 38100 Grenoble (FR)**
• **DUPOY, Mathieu 38500 Coublevie (FR)**
• **TAUREL, Boris 38330 Montbonnot-Saint-Martin (FR)**

(74) Mandataire: **Brevalex 56, Boulevard de l'Embouchure B.P. 27519 31075 Toulouse Cedex 2 (FR)**

(56) Documents cités:
**DE-A1-102004 010 757     JP-A- S63 304 137**

**Description**

**DOMAINE TECHNIQUE**

L'invention concerne le domaine des capteurs biologiques ou chimiques, en particulier des capteurs de concentration en gaz.

L'invention concerne plus particulièrement des capteurs comprenant une cavité destinée à recevoir un milieu biologique ou chimique, dans laquelle un faisceau d'analyse est partiellement absorbé.

**ÉTAT DE LA TECHNIQUE ANTÉRIEURE**

On connaît dans l'art antérieur des capteurs chimiques de type capteur de gaz, comprenant une cavité, dite d'absorption, dont les parois internes sont munies d'un revêtement réfléchissant.

La cavité d'absorption présente des ouvertures sur l'extérieur, de sorte qu'elle se remplit du milieu gazeux environnant.

A l'intérieur de la cavité d'absorption se trouvent une source lumineuse, pour l'émission d'un faisceau lumineux dit d'analyse, et un photo-détecteur, pour la détection d'un faisceau de mesure correspondant au faisceau d'analyse après absorption partielle par le gaz à l'intérieur de la cavité.

La cavité d'absorption présente par exemple une forme d'ellipse, avec la source lumineuse placée en un premier foyer de l'ellipse, et le photo-détecteur placé en un second foyer de l'ellipse. Le faisceau d'analyse émis par la source lumineuse se propage dans la cavité, se réfléchit sur une paroi réfléchissante de celle-ci, et revient vers le photo-détecteur. Le faisceau d'analyse effectue ainsi deux passages dans la cavité.

On peut alors calculer un taux d'absorption à une longueur d'onde caractéristique d'un gaz prédéterminé, pour obtenir une concentration de ce gaz dans la cavité, et donc dans le milieu gazeux environnant.

La mesure de concentration utilise la loi de Beer-Lambert :

$$I(r) = I_0 e^{-\alpha r} \qquad (1)$$

avec:

$r$ une distance parcourue par le faisceau d'analyse dans la cavité ;
$\alpha$ le coefficient d'absorption du gaz prédéterminé, coefficient lié à la nature du gaz en présence et à sa concentration ;
$I_0$ l'intensité lumineuse du faisceau d'analyse, émis par la source lumineuse ; et
$I(r)$ l'intensité lumineuse du faisceau de mesure, mesurée par le photo-détecteur.

La variation d'intensité lumineuse $\frac{I(r)}{I_0}$ permet ainsi de mesurer une concentration en gaz.

Afin d'augmenter la sensibilité de la mesure, une solution consiste à augmenter la distance $r$ parcourue par le faisceau d'analyse dans la cavité.

Le document EP 2 891876 décrit par exemple une cavité d'absorption constituée d'un miroir plan et d'un miroir sphérique. En positionnant la source lumineuse sur le miroir sphérique, et le photo-détecteur sur le miroir plan, on obtient un capteur de gaz dans lequel le faisceau d'analyse effectue trois traversées de la cavité avant d'être reçu par le photo-détecteur.

On connaît également dans l'art antérieur le document JP S63 304137, qui décrit une cavité d'absorption délimitée par un miroir concave paraboloïde.

On connaît aussi dans l'art antérieur le document DE 10 2004 010757, qui décrit une cavité d'absorption pouvant présenter une forme de cylindre droit à base elliptique, avec une source lumineuse et un photo-détecteur placés directement aux foyers respectifs de l'ellipse.

Un objectif de la présente invention est de proposer un dispositif optique à cavité d'absorption, pour un capteur chimique ou biologique tel qu'un capteur de gaz, permettant d'augmenter encore la sensibilité du capteur.

**EXPOSÉ DE L'INVENTION**

Cet objectif est atteint avec un dispositif optique tel que mentionné en revendication 1.

Le faisceau de mesure correspond au faisceau d'analyse en sortie de la cavité d'absorption, c'est-à-dire après qu'il a transité dans la cavité d'absorption.

Ainsi, dans un capteur chimique ou biologique comprenant un tel dispositif optique, la source lumineuse émettant le faisceau d'analyse est déportée à l'extérieur de la cavité.

De la même façon, le photo-détecteur est déporté à l'extérieur de la cavité.

On s'affranchit ainsi des contraintes liées à l'intégration d'un composant à l'intérieur d'une cavité de volume réduit.

L'invention permet donc de simplifier l'intégration de la source lumineuse et du photo-détecteur, dans un capteur à cavité d'absorption.

Cette intégration simplifiée peut permettre d'améliorer une précision de positionnement et d'alignement de la source lumineuse et du photo-détecteur, et donc d'améliorer la sensibilité dudit capteur.

L'invention permet également d'exploiter les possibilités de l'optique guidée pour traiter le faisceau d'analyse avant son entrée dans la cavité d'absorption et/ou le faisceau de mesure sortant de la cavité d'absorption (filtrage spectral, routage, etc.).

Il est ainsi possible d'améliorer un rapport signal sur bruit sur le faisceau de mesure. Ainsi, on peut améliorer encore la sensibilité d'un capteur à cavité d'absorption.

L'invention est particulièrement astucieuse en ce qu'elle s'affranchit des préjugés de l'homme du métier en proposant une nouvelle piste d'amélioration de la sensibilité ne reposant pas sur une nouvelle forme de la cavité d'absorption.

D'autres caractéristiques optionnelles de l'invention sont mentionnées dans les revendications dépendantes.

L'invention concerne également un capteur chimique ou biologique, comprenant :

- un dispositif optique selon l'invention ;
- une source lumineuse, pour l'émission du faisceau lumineux d'analyse ; et
- un photo-détecteur, pour la réception du faisceau lumineux de mesure.

## BRÈVE DESCRIPTION DES DESSINS

La présente invention sera mieux comprise à la lecture de la description d'exemples de réalisation donnés à titre purement indicatif et nullement limitatif, en faisant référence aux dessins annexés sur lesquels :

- les figures 1A et 1B illustrent de façon schématique un premier mode de réalisation d'un dispositif optique et un capteur chimique ou biologique selon l'invention, selon deux vues en coupe ;
- la figure 2 illustre de façon schématique un détail d'un guide d'onde d'injection, respectivement un guide d'onde d'extraction selon le mode de réalisation représenté aux figures 1A et 1B ;
- les figures 3A et 3B illustrent l'ajustement de taille de mode mis en œuvre grâce à un guide d'onde tel que représenté en figure 2 ;
- la figure 4 illustre de façon schématique une variante du mode de réalisation représenté aux figures 1A et 1B ;
- la figure 5 illustre de façon schématique un deuxième mode de réalisation d'un dispositif optique et un capteur chimique ou biologique selon l'invention ;
- la figure 6 illustre de façon schématique une variante du mode de réalisation représenté à la figure 5 ; et
- la figure 7 illustre de façon schématique un exemple de procédé de réalisation d'un dispositif optique selon l'invention.

## EXPOSÉ DÉTAILLÉ DE MODES DE RÉALISATION PARTICULIERS

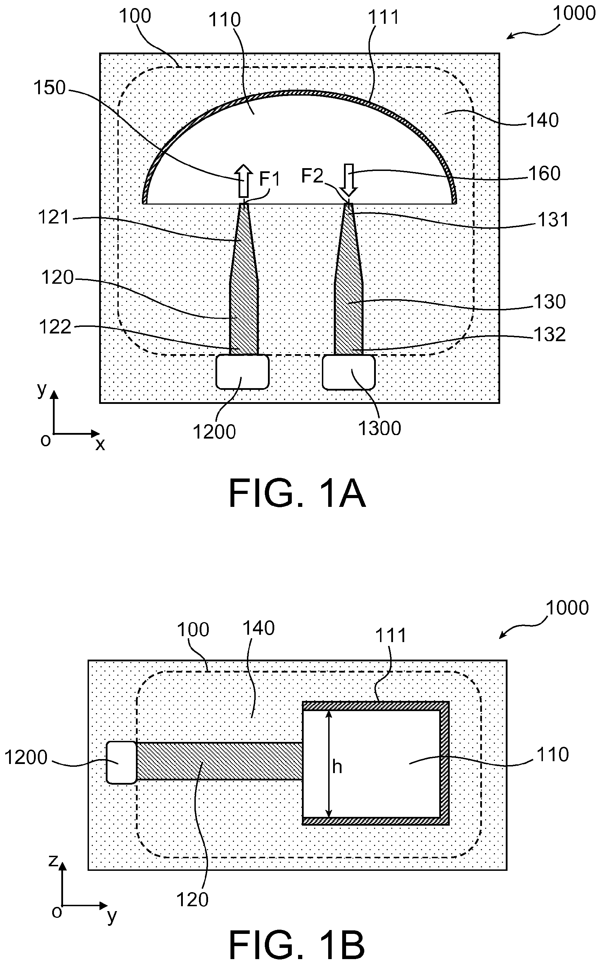

On décrit tout d'abord, en référence aux figures 1A et 1B, un premier mode de réalisation d'un dispositif optique 100 et un capteur chimique ou biologique 1000 selon l'invention.

La figure 1A est une vue en coupe, dans le plan (xOy) d'un repère orthonormé.

La figure 1B est une vue en coupe, dans le plan (yOz) dudit repère.

On peut considérer que la figure 1A est une vue de dessus en transparence, et la figure 1B une vue de côté en transparence.

Le dispositif optique 100 comprend une cavité d'absorption 110, un guide d'onde d'injection 120 et un guide d'onde d'extraction 130.

En pratique, le dispositif optique 100 est avantageusement formé dans un substrat 140, par exemple un substrat en silicium.

La cavité d'absorption 110 est destinée à recevoir un milieu gazeux ou même liquide, qui va absorber en partie un faisceau lumineux d'analyse, l'absorption étant caractéristique d'un élément chimique ou biologique et de la concentration de cet élément.

La cavité d'absorption 110 présente ici une forme de cylindre droit, dont la base est une demi-ellipse.

La base est parallèle au plan (xOy) (voir figure 1A).

La génératrice du cylindre est parallèle à l'axe (Oz).

La hauteur h de la cavité est donc mesurée selon cet axe (Oz).

Dans toute la suite, mais de manière non limitative, on s'intéressera plus particulièrement à cette forme de cavité d'absorption.

Les parois internes de la cavité d'absorption 110 sont recouvertes au moins partiellement d'un revêtement réfléchissant 111, ici une fine couche d'or. Le revêtement réfléchissant 111 s'étend en particulier sur une paroi plane supérieure, une paroi plane inférieure, et une paroi latérale arrondie de la cavité 110.

Le guide d'onde d'injection 120 est configuré pour guider un faisceau d'analyse 150 depuis l'extérieur de la cavité d'absorption 110, jusqu'en entrée de celle-ci.

En particulier, le guide d'onde d'injection 120 présente une première extrémité 121 disposée en un premier foyer F1 de l'ellipse définissant la cavité d'absorption. En particulier, le centre du guide d'onde d'injection 120, à son extrémité située du côté de la cavité d'absorption 110, coïncide avec le foyer F1.

Le guide d'onde d'injection 120 s'étend ici entièrement à l'extérieur de la cavité d'absorption 110.

La hauteur du guide d'onde d'injection 120 est inférieure à celle de la cavité d'absorption (dimension selon l'axe (Oz)), par exemple au moins deux fois inférieure.

Le guide d'onde d'extraction 130 est configuré pour guider un faisceau de mesure 160 jusqu'à l'extérieur de la cavité d'absorption 110.

En particulier, le guide d'onde d'extraction 130 présente une première extrémité 131 disposée en un second foyer F2 de l'ellipse définissant la cavité d'absorption. En particulier, le centre du guide d'onde d'extraction 130, à son extrémité située du côté de la cavité d'absorption 110, coïncide avec le foyer F2.

Le guide d'onde d'extraction 130 s'étend ici entièrement à l'extérieur de la cavité d'absorption 110.

La hauteur du guide d'onde d'extraction 130 est inférieure à celle de la cavité d'absorption, par exemple au moins deux fois inférieure.

Le capteur chimique ou biologique 1000 comprend le dispositif optique 100, une source lumineuse 1200 et un photo-détecteur 1300.

La source lumineuse 1200 est disposée ici à une seconde extrémité 122 du guide d'onde d'injection 120.

Il s'agit de préférence d'une source laser à cascade quantique (QCL), ou une barrette de plusieurs QCLs. En variante, il peut s'agir d'une source infra-rouge non dispersive (NDIR) en configuration guidée (et non en espace libre).

La source lumineuse 1200 émet le faisceau d'analyse 150, qui se propage dans le guide d'onde d'injection jusqu'à l'entrée dans la cavité d'absorption 110.

Le faisceau d'analyse 150 traverse une première fois la cavité d'absorption en partant du premier foyer F1 de l'ellipse, se réfléchit sur le revêtement réfléchissant 111 à l'intérieur de la cavité d'absorption, et traverse une seconde fois la cavité d'absorption jusqu'à atteindre le second foyer F2 de l'ellipse et entrer dans le guide d'onde d'extraction 130.

Au cours de ces deux traversées de la cavité d'absorption, le faisceau d'analyse est partiellement absorbé par le milieu gazeux ou liquide remplissant la cavité d'absorption.

On nomme « faisceau de mesure » 160, le faisceau d'analyse à sa sortie de la cavité d'absorption, en entrée du guide d'onde d'extraction, ici au second foyer F2 de l'ellipse.

Le photo-détecteur 1300 est disposé ici à une seconde extrémité 132 du guide d'onde d'extraction 130.

Il s'agit par exemple d'un détecteur infrarouge, de type bolométrique ou pyroélectrique, ou thermopile.

Il reçoit le faisceau de mesure 160, qui s'est propagé dans le guide d'onde d'extraction 130 après avoir quitté la cavité d'absorption 110.

On voit donc que le dispositif optique selon l'invention permet que la source lumineuse pour émettre le faisceau d'analyse, et le photo-détecteur pour recevoir le faisceau de mesure, soient placés à l'extérieur de la cavité d'absorption. Leur intégration est donc facilitée.

La longueur d'onde centrale du faisceau d'analyse dépend de la nature de l'espèce chimique ou biologique à détecter.

Les matériaux constituant le guide d'onde d'injection 120 et le guide d'onde d'extraction 130 sont adaptés à ladite longueur d'onde centrale.

Par exemple, pour un faisceau d'analyse dans le moyen infrarouge (longueurs d'onde comprises entre 3 $\mu$m et 15 $\mu$m), les guides d'onde d'injection 120 et extraction 130 comprennent de préférence un cœur en germanium, ou un alliage de silicium et de germanium, et une gaine en silicium, ou un alliage de silicium et germanium.

Pour un faisceau d'analyse dans le proche infrarouge (longueurs d'onde comprises entre 1 $\mu$m et 3 $\mu$m), les guides d'onde d'injection 120 et extraction 130 comprennent de préférence un cœur en silicium (Si) et une gaine en silice ($SiO_2$).

Pour un faisceau d'analyse dans le visible (longueurs d'onde inférieures à 1 $\mu$m, en particulier comprises entre 0,4 $\mu$m et 0,8 $\mu$m), les guides d'onde d'injection 120 et extraction 130 comprennent de préférence un cœur en nitrure de silicium ($Si_3N_4$) et une gaine en silice ($SiO_2$). Un faisceau d'analyse dans le visible peut être utilisé pour détecter une espèce biologique, de préférence dans un milieu liquide, ou pour une détection de particules.

Avantageusement, mais de manière non limitative, la source lumineuse 1200 est intégrée dans un même substrat que le dispositif optique 100.

La source lumineuse 1200 est par exemple une source thermique telle que décrite dans la demande de brevet FR 2 974 423, émettant un rayonnement infrarouge.

En variante, la source lumineuse 1200 peut être une source laser à cascade quantique.

De la même façon, le photo-détecteur 1300 est avantageusement intégré dans un même substrat que le dispositif optique 100.

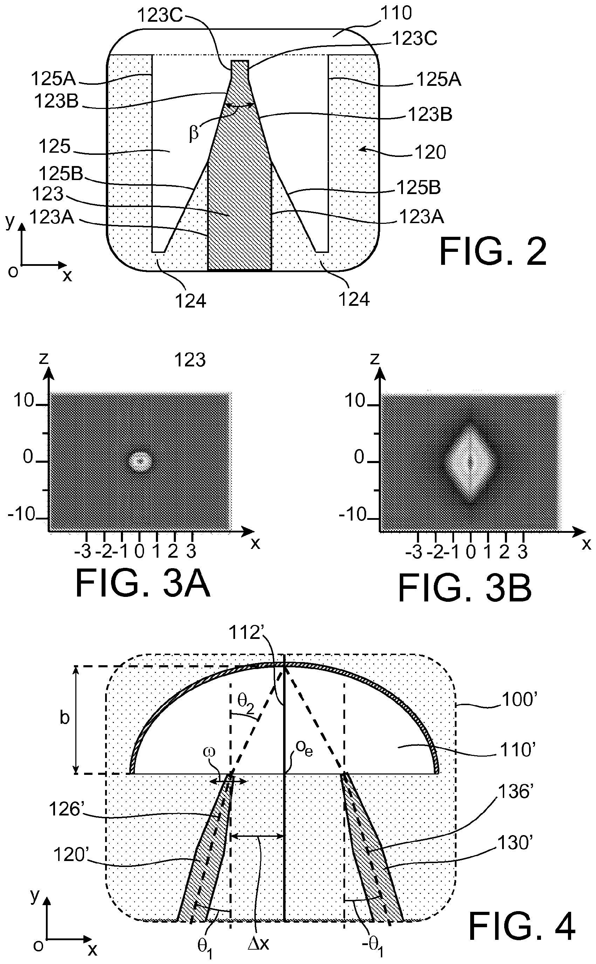

La figure 2 illustre de façon schématique un détail du guide d'onde d'injection 120, du côté de la cavité d'absorption 110.

Le guide d'onde d'extraction 130 présente la même structure.

Le guide d'onde d'injection 120 comprend un cœur 123, et une gaine dite principale 124 constituée ici par une portion du substrat 140 (voir figure 1A).

A son extrémité située du côté de la cavité d'absorption, le guide d'onde d'injection 120 est dit « en pointe ». En d'autres termes, cette extrémité est affinée, du côté de la cavité d'absorption.

En particulier, le cœur 123 présente une forme en pointe.

On a défini, en référence aux figures 1A et 1B, un cylindre droit 110 dont la base présente la forme d'une demi-ellipse.

Selon la génératrice de ce cylindre, le cœur 123 présente une hauteur constante.

Dans les plans parallèles à la base de ce cylindre, le cœur présente une forme définie par :

- deux premières parois 123A parallèles entre elles ; et
- deux deuxièmes parois 123B inclinées entre elles d'un angle β, formant ensemble une pointe dirigée vers l'intérieur de la cavité d'absorption 110.

Ici, l'extrémité de la pointe présente une section carré ou rectangulaire, définie par deux troisièmes parois 123C parallèles entre elles, dont l'écartement correspond à l'écartement minimal des deux deuxièmes parois 123B.

Cette extrémité à section carré ou rectangulaire permet une meilleure maîtrise de la largeur minimale du cœur 123.

Le guide d'onde d'injection 120 présente également une région dite d'adaptation 125.

La région d'adaptation 125 présente également une hauteur constante selon la génératrice du cylindre.

Dans les plans parallèles à la base de ce cylindre, la région d'adaptation 125 encadre une largeur décroissante de la gaine 124, puis encadre les parois 123B et 123C en forme de pointe du cœur 123, en étant en contact physique direct avec elles.

Ainsi, de part et d'autre du cœur 123, la région d'adaptation 125 présente une section dont la largeur augmente progressivement au fur et à mesure qu'on se rapproche de la cavité d'absorption 110, de sorte que la largeur de la gaine 124 diminue progressivement jusqu'à disparaître entièrement, puis la largeur du cœur diminue progressivement jusqu'à atteindre une largeur finale.

La région d'adaptation 125 est définie notamment par :

- deux premières parois 125A parallèles entre elles, définissant les limites externes de la région d'adaptation ;
- deux deuxièmes parois 125B inclinées entre elles, et définissant la portion de gaine 124 dont la largeur décroît au fur et à mesure que l'on se rapproche de la cavité d'absorption 110 ; et
- des parois qui s'étendent parallèles aux parois 123B et 123C du cœur, en contact physique direct avec celles-ci, là où la région d'absorption 125 encadre directement l'extrémité en pointe du cœur 123.

L'indice de réfraction de la région d'adaptation 125 est inférieur à l'indice de réfraction de la gaine 124, et donc *a fortiori* à l'indice de réfraction du cœur 123.

L'extrémité en pointe du guide d'onde d'injection 120 entraîne donc une diminution progressive de l'indice effectif du mode guidé par le guide d'onde d'injection, au fur et à mesure que l'on se rapproche de la cavité d'absorption 110.

Par conséquent, la forme dudit mode guidé est modifiée progressivement, au fur et à mesure que l'on se rapproche de la cavité d'absorption 110.

En particulier, la dimension verticale dudit mode guidé, selon un axe parallèle à la génératrice du cylindre, augmente progressivement.

En sortie du guide d'onde d'injection 120, la dimension verticale du mode guidé dans ledit guide d'onde est sensiblement égale à la hauteur de la cavité, c'est-à-dire à la dimension verticale du mode fondamental de la cavité.

En particulier, le rapport entre la dimension verticale du mode guidé dans le guide d'onde et la hauteur de la cavité d'absorption est par exemple compris entre 0,75 et 1,25.

On réalise ainsi une adaptation de taille verticale de mode (où la verticale est la génératrice du cylindre droit), entre le mode fondamental de la cavité d'absorption 110 et le mode guidé dans le guide d'onde d'injection.

Le guide d'onde d'extraction 130 réalise, de la même façon, une adaptation de taille verticale de mode, entre le mode fondamental de la cavité d'absorption 110 et le mode guidé dans le guide d'onde d'extraction. En particulier, en entrée du guide d'onde d'extraction 130, la dimension verticale du mode guidé dans ledit guide d'onde est sensiblement égale à la dimension verticale du mode fondamental de la cavité, et diminue progressivement au fur et à mesure que l'on s'éloigne de la cavité d'absorption.

On s'affranchit ainsi des inconvénients liés à la divergence du faisceau d'analyse à l'intérieur de la cavité d'absorption, dans des plans parallèles à la génératrice du cylindre.

L'adaptation de mode n'est pas nécessaire dans les plans parallèles à la base du cylindre, puisque dans ces plans, la forme elliptique de la cavité d'absorption 110 assure la convergence des rayons lumineux du guide d'onde d'injection vers le guide d'onde d'extraction.

De préférence, la région d'adaptation 125 est constituée par au moins un logement, ou excavation, ou cavité secondaire, creusé(e) dans le substrat, et ouvert(e) sur la cavité d'absorption 110.

Ledit logement est donc rempli par le même milieu gazeux ou liquide que la cavité d'absorption 110, ce qui permet d'optimiser l'adaptation de mode entre les guides d'onde d'injection et extraction, et la cavité d'absorption.

Dans ce cas, aucun anti-reflet n'est nécessaire sur les extrémités en pointe des guides d'onde.

La région d'adaptation 125 est formée plus particulièrement par deux logements, disposés de part et d'autre du cœur 123.

On rappelle ici que l'indice effectif d'un mode guidé dans un guide d'onde est défini de la façon suivante :

$$ N_{eff} = \beta * \frac{\lambda}{2\pi} \qquad (2) $$

avec :

$N_{eff}$ l'indice effectif du mode considéré ;
$\lambda$ la longueur d'onde du faisceau lumineux se propageant dans le guide d'onde ; et
$\beta$ la constante de phase du guide d'onde.

La constante de phase $\beta$ dépend de la longueur d'onde et du mode du faisceau lumineux se propageant dans le guide d'onde, ainsi que des propriétés de ce guide d'onde (en particulier des indices de réfraction et géométrie).

On peut parfois considérer que l'indice effectif désigne l'indice optique moyen du milieu tel qu'il est « vu » par un mode du faisceau lumineux se propageant dans le guide d'onde.

Les figures 3A et 3B illustrent l'adaptation de mode mise en œuvre dans le guide d'onde représenté en figure 2.

Le cœur 123 présente une hauteur constante de 3 $\mu$m, et une largeur maximale de 2 $\mu$m. Il est en alliage de silicium et germanium, et présente un indice de réfraction égal à 3,6.

La gaine 124 est en silicium, d'indice de réfraction égal à 3,4.

La longueur d'onde centrale du faisceau d'analyse est égale à 4,26 $\mu$m.

La cavité d'absorption présente une hauteur de 25 $\mu$m, définissant la taille verticale du mode fondamental dans ladite cavité.

Sur les figures 3A et 3B, l'axe des abscisses est gradué en $\mu$m, et correspond à une dimension selon l'axe (Ox) (axe de la largeur de la cavité absorbante).

L'axe des ordonnées est gradué en $\mu$m, et correspond à une dimension selon l'axe (Oz) (axe vertical, ou axe de la hauteur de la cavité absorbante).

La figure 3A représente la taille du mode guidé, à une position dans le guide d'onde d'injection, respectivement d'extraction, où la largeur du cœur 123 est de 1 $\mu$m. Le mode guidé présente une dimension selon l'axe (Oz) égale à environ 5 $\mu$m.

La figure 3B représente la taille du mode guidé, à une position dans le guide d'onde d'injection, respectivement d'extraction, où la largeur du cœur 123 est de 0,1 $\mu$m. Le mode guidé présente une dimension selon l'axe (Oz) égale à environ 20 $\mu$m.

La forme en pointe de l'extrémité du guide d'onde d'injection, respectivement d'extraction, permet donc de réaliser une adaptation verticale de mode, entre le mode guidé dans le guide d'onde d'injection, respectivement d'extraction, et le mode fondamental de la cavité d'absorption.

La figure 4 illustre une variante du dispositif optique représenté aux figures 1A et 1B.

Selon ce mode de réalisation, l'axe central 126' du guide d'onde d'injection 120' est incliné d'un angle $\theta_1$ relativement à un plan de symétrie 112' de la cavité d'absorption 110'.

Le plan de symétrie 112' est un plan vertical parallèle à l'axe (Oz), et passant par l'un parmi le petit axe ou le grand axe de l'ellipse, ici le petit axe.

L'angle $\theta_1$ correspond sensiblement à l'angle d'incidence d'un faisceau lumineux atteignant la cavité d'absorption 110', tel que le rayon réfracté correspondant se propage à l'intérieur de la cavité d'absorption jusqu'à l'intersection entre le plan de symétrie 112' et la paroi en forme d'ellipse de ladite cavité.

En d'autres termes, d'après les lois de Snell-Descartes, l'angle $\theta_1$ est sensiblement égal à :

$$\theta_i = \sin^{-1}\left(\frac{n_c * \Delta x}{n_i * \sqrt{\Delta x^2 + b^2}}\right) \tag{3}$$

avec :

$n_c$ l'indice de réfraction à l'intérieur de la cavité d'absorption ;

$n_i$ l'indice effectif du mode guidé dans le guide d'onde d'injection, là où la largeur du cœur est minimale, juste avant l'entrée dans la cavité d'absorption ; $\frac{\Delta x}{\sqrt{\Delta x^2 + b^2}} = \sin(\theta_2)$, avec $\theta_2$ l'angle de réfraction dudit rayon réfracté ;

$b$ la distance entre le centre 0e de l'ellipse et le fond de la cavité d'absorption, ici la moitié de la longueur du demi-petit axe de l'ellipse (mesurée selon un axe parallèle à (Oy)) ; et

$\Delta x$ la distance entre le centre 0e de l'ellipse et le centre du guide d'onde d'injection à l'entrée dans la cavité d'absorption 110' (mesurée selon un axe parallèle à (Ox)).

Par sensiblement égal, on entend de préférence égal à plus ou moins 1° près, voire même à plus ou moins 2° près.

De préférence, l'angle $\theta_1$ est exactement égal à $\theta_i$.

En pratique, l'angle $\theta_1$ est par exemple supérieur ou égal à 3°, voire même supérieur ou égal à 5° ou même plus, en valeur absolue.

En tout état de cause, l'angle $\theta_1$ est tel que l'axe central 126' du guide d'onde d'injection est incliné vers le plan de symétrie 112' de la cavité d'absorption.

De préférence, le guide d'onde d'injection 120' et le guide d'onde d'extraction 130' sont symétriques l'un de l'autre relativement au plan de symétrie 112'.

Ici, cela se traduit par un axe central 136' du guide d'onde d'extraction 130' incliné d'un angle -$\theta_1$ relativement au plan de symétrie 112'.

Cette inclinaison des guides d'onde d'injection et d'extraction, vers le plan de symétrie 112' de la cavité d'absorption, permet que le rayon central du faisceau d'analyse se propage du guide d'onde d'injection vers le fond de la cavité d'absorption, et du fond de la cavité d'absorption vers le guide d'onde d'extraction.

On améliore ainsi le couplage entre le guide d'onde d'injection et le guide d'onde d'extraction.

Dans chacun des modes de réalisation selon l'invention, la distance entre les extrémités respectives des guides d'onde d'injection et d'extraction, du côté de la cavité d'absorption, est suffisamment élevée pour éviter tout couplage évanescent entre ces deux guides. En d'autres termes, il s'agit d'éviter qu'un mode guidé en sortie du guide d'onde d'injection interfère avec un mode guidé en entrée du guide d'onde d'extraction.

La plus petite distance entre ces extrémités, permettant d'éviter un tel couplage, dépend donc de la largeur du mode guidé en sortie du guide d'onde d'injection, et en entrée du guide d'onde d'extraction. Cette plus petite distance est donc fonction des dimensions et indices de réfraction aux extrémités respectives de ces deux guides d'onde, du côté de la cavité d'absorption.

Cette distance est mesurée de préférence entre le centre du guide d'onde d'injection et le centre du guide d'onde d'extraction, à leurs extrémités situées du côté de la cavité d'absorption.

Cette distance vaut $2 * \Delta x$ (voir figure 4).

On choisit de préférence $\Delta x \geq w$, avec w la largeur du mode guidé en sortie du guide d'onde d'injection, respectivement en entrée du guide d'onde d'extraction, projetée sur l'axe (Ox).

L'axe (Ox) est l'axe joignant le centre du guide d'onde d'injection et le centre du guide d'onde d'extraction, à leurs extrémités situées du côté de la cavité d'absorption.

La largeur du mode guidé en sortie du guide d'onde d'injection, respectivement en entrée du guide d'onde d'extraction, est une largeur à $1/e^2$ en intensité, pour un mode guidé gaussien.

La largeur du mode guidé est mesurée de préférence dans un plan orthogonal à l'axe central du guide d'onde d'injection, respectivement du guide d'onde d'extraction.

Cette largeur est mesurée en particulier selon un axe correspondant à l'intersection entre un tel plan, et un plan parallèle à la base du cylindre (cylindre définissant la forme de la cavité d'absorption).

En pratique, lorsque les guides d'onde d'injection et extraction sont parallèles entre eux, on peut utiliser directement la largeur du mode guidé en sortie du guide d'onde d'injection, respectivement en entrée du guide d'onde d'extraction.

On a par exemple $\Delta x$ supérieur ou égal à 5 $\mu$m, et même supérieur ou égal à 10 $\mu$m.

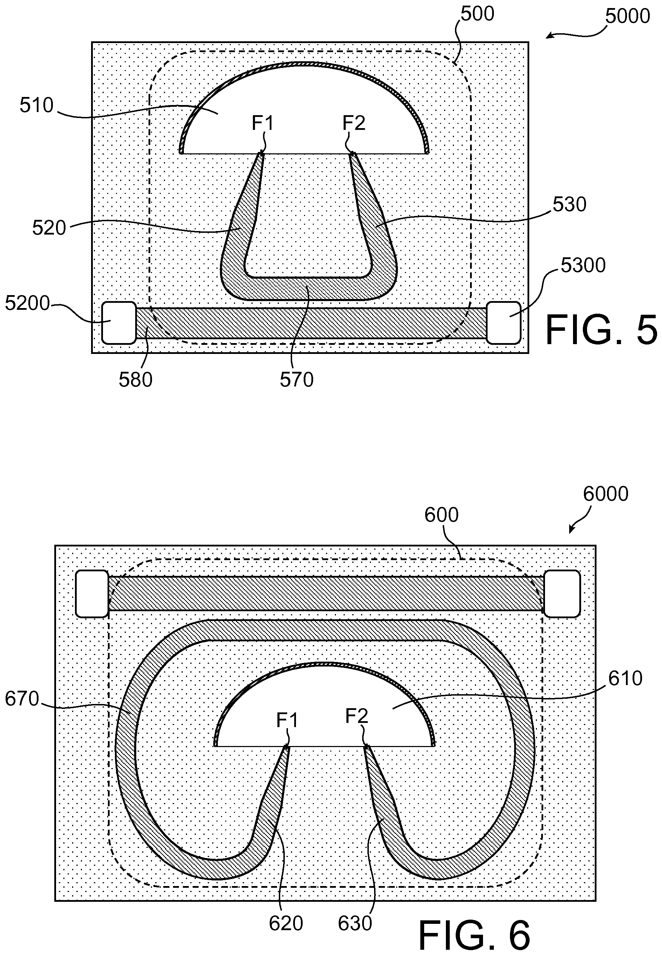

La figure 5 illustre, de façon schématique, un deuxième mode de réalisation, d'un dispositif optique 500 et un capteur chimique ou biologique 5000 selon l'invention.

Selon ce mode de réalisation, le guide d'onde d'injection 520 et le guide d'onde d'extraction 530 sont reliés ensemble par un guide d'onde dit de rebouclage 570.

En d'autres termes, le guide d'onde d'injection 520, le guide d'onde d'extraction 530 et le guide d'onde de rebouclage 570 forment ensemble un seul et même guide d'onde courbé.

Le guide d'onde courbé et la cavité d'absorption sont agencés ensemble pour guider la lumière selon un trajet en boucle. On dit qu'ils forment ensemble une boucle.

De préférence, le guide d'onde courbé est adapté pour que le déphasage apporté par un tour dans ladite boucle, à une longueur d'onde d'intérêt du faisceau d'analyse, soit un multiple de $2\pi$. En d'autres termes, ladite boucle est résonante à une longueur d'onde d'intérêt du faisceau d'analyse. Cette résonance est par exemple obtenue par un choix adéquat de la longueur curviligne du guide d'onde courbé.

Dans le mode de réalisation de la figure 5, ce guide d'onde courbé s'étend entre le premier foyer F1 et le second foyer F2 de l'ellipse, du côté opposé à la paroi en forme d'ellipse de la cavité résonante 510.

Ce guide d'onde courbé est couplé à un guide d'onde dit principal 580, par couplage évanescent.

En d'autres termes, un mode guidé du guide d'onde principal interfère avec un mode guidé du guide d'onde courbé, ce qui aboutit à un transfert d'énergie entre ces deux modes.

Le guide d'onde principal 580 s'étend ici en ligne droite, parallèle à une tangente au guide d'onde courbé, en particulier une tangente au guide d'onde de rebouclage 570.

De préférence, mais de manière non limitative, il n'y a pas de contact physique direct entre le guide d'onde principal 580 et le guide d'onde courbé, la distance entre ces deux guides étant adaptée à l'établissement dudit couplage évanescent.

En particulier et de manière avantageuse, lorsque le taux de couplage est optimisé, il n'y a pas de contact physique direct entre le guide d'onde principal et le guide d'onde courbé, notamment le guide d'onde de rebouclage.

A une première extrémité du guide d'onde principal 580 se trouve la source lumineuse 5200, tandis qu'à l'autre extrémité du guide d'onde principal 580 se trouve le photo-détecteur 5300.

En fonctionnement, le faisceau d'analyse émis par la source lumineuse 5200 se propage dans le guide d'onde principal 580, jusqu'à un point de couplage avec le guide d'onde courbé où il est au moins partiellement transféré dans le guide d'onde courbé.

Le faisceau d'analyse effectue alors plusieurs tours dans une boucle constituée par le guide d'onde d'injection 520, la cavité d'absorption 510, le guide d'onde d'extraction 530, et le guide d'onde de rebouclage 570.

Le faisceau d'analyse effectue ainsi plusieurs passages dans la cavité d'absorption 510.

Il revient ensuite dans le guide d'onde principal 580, également par couplage évanescent. Le faisceau d'analyse revenant dans le guide d'onde principal 580 forme le faisceau de mesure selon l'invention, qui se propage dans le guide d'onde principal 580 jusqu'au photo-détecteur 5300.

Ce mode de réalisation permet d'augmenter fortement la longueur cumulée du trajet du faisceau d'analyse dans la cavité d'absorption 510, sans nuire à la compacité du dispositif optique 500 et du capteur 5000 selon l'invention.

On peut ainsi augmenter fortement la sensibilité d'un capteur chimique ou biologique à cavité d'absorption, sans nuire à sa compacité.

On peut mesurer le gain en sensibilité apporté par un tel rebouclage entre les guides d'onde d'injection et d'extraction, à l'aide d'un modèle analytique.

Le taux de transmission depuis l'entrée jusqu'à la sortie du guide d'onde principal est donné par :

$$\tau = 1 - \frac{K(1-\Gamma)}{1+Z^2-2Z\cos\varphi} \qquad (4)$$

avec :

$Z = \sqrt{(1-K)\Gamma}$ le coefficient d'atténuation total en amplitude, lié aux pertes métalliques de la cavité d'absorption, aux pertes dues au milieu à l'intérieur de la cavité, aux pertes par propagation dans les guides d'onde, et aux pertes dues au couplage évanescent entre le guide d'onde principal et le guide d'onde courbé ;

$K$ le coefficient de couplage entre le guide d'onde principal et le guide d'onde courbé, lié à la distance entre ces

deux guides ;

$\varphi$ le déphasage après un tour dans la boucle constituée par le guide d'onde courbé et la cavité d'absorption, supposé égal à un multiple de $2\pi$ ; et

$\Gamma$ le coefficient d'atténuation en intensité, par tour dans ladite boucle (lié aux pertes métalliques de la cavité d'absorption, aux pertes dues au milieu à l'intérieur de la cavité, et aux pertes par propagation dans le guide d'onde courbé).

Le coefficient d'atténuation $\Gamma$ a deux contributions :

- une contribution $\Gamma_p$ liée aux pertes dans le guide d'onde courbé. Ces pertes sont d'environ 1 dB/cm, soit $\Gamma_p$=0,94 pour une cavité elliptique de demi-petit axe égal à 100 $\mu$m ;
- une contribution liée à la cavité.

Dans une cavité sans gaz, cette contribution vaut : $\Gamma_{c0} = R^{\frac{2b\lambda}{h^2}}$.

Dans le cas d'une cavité avec gaz, elle vaut : $\Gamma_{c1} = e^{-3,5.10^{-6}b*C} * \Gamma_{c0}$ ;
avec, lorsque le gaz à détecter est du $CO_2$ :

$\lambda$=4,26 $\mu$m, située dans la gamme d'absorption du $CO_2$,
$C$ la concentration en gaz en ppm (parties par million),
$R$=0,98 le coefficient de réflexion de l'or à $\lambda$=4,26 $\mu$m,
$b$=100 $\mu$m la longueur du demi-petit axe de l'ellipse définissant la cavité d'absorption, et
$h$=25 $\mu$m la hauteur de la cavité d'absorption.

On a ensuite $\Gamma = \Gamma_p * \Gamma_{c1}$ ou $\Gamma = \Gamma_p * \Gamma_{c0}$.

Connaissant $\Gamma$, on choisit une valeur optimale du coefficient de couplage $K$, permettant d'obtenir la meilleure sensibilité.

En particulier, pour différentes concentrations $C$, on compare le taux de transmission $\tau$ avec gaz et le taux de transmission $\tau$ sans gaz, en fonction de $K$.

On recherche en particulier un pic sur une courbe donnant la différence en valeur absolue entre le taux de transmission sans gaz et le taux de transmission avec gaz, en fonction de $K$. Si plusieurs pics sont identifiés, on choisit celui présentant la plus grande largeur à mi-hauteur, pour des raisons de stabilité.

La distance entre le guide d'onde principal et le guide d'onde courbé est inférieure à $\lambda$.

Ici, on choisit $K$ compris entre 0,3 et 0,5, ce qui détermine une distance optimale entre le guide d'onde principal et le guide d'onde courbé.

On calcule alors la sensibilité du capteur selon l'invention présentant les caractéristiques ci-dessus, pour différentes concentrations en $CO_2$. Cette sensibilité correspond au rapport entre l'intensité lumineuse mesurée par le photo-détecteur en l'absence de gaz, et en présence de gaz à ladite concentration.

Cette sensibilité est comparée à celle d'un capteur selon l'art antérieur, dont la cavité d'absorption présente les mêmes dimensions.

Pour une concentration en $CO_2$ de 10 ppm et moins, le gain en sensibilité est multiplié par un facteur environ égal à 4.

Quelle que soit la concentration en $CO_2$, la sensibilité est améliorée.

La figure 6 illustre une variante avantageuse du mode de réalisation de la figure 5.

Le dispositif optique 600 et le capteur 6000 selon cette variante ne diffèrent du mode de réalisation illustré en figure 5, qu'en ce que le guide d'onde d'injection 620, le guide d'onde d'extraction 630 et le guide d'onde de rebouclage 670 forment ensemble un seul et même guide d'onde courbé, qui s'étend entre le premier foyer F1 et le second foyer F2 de l'ellipse, en passant par l'arrière de la cavité.

En d'autres termes, le guide d'onde courbé entoure en partie la cavité d'absorption 610, en s'étendant du côté de la cavité 610 opposé au côté recevant les extrémités respectives du guide d'onde d'injection 620 et du guide d'onde d'extraction 630.

L'avantage supplémentaire conféré par cette variante est une courbure moindre du guide d'onde courbé. On minimise ainsi les pertes optiques dans le guide d'onde courbé, en particulier les pertes vers des modes radiatifs.

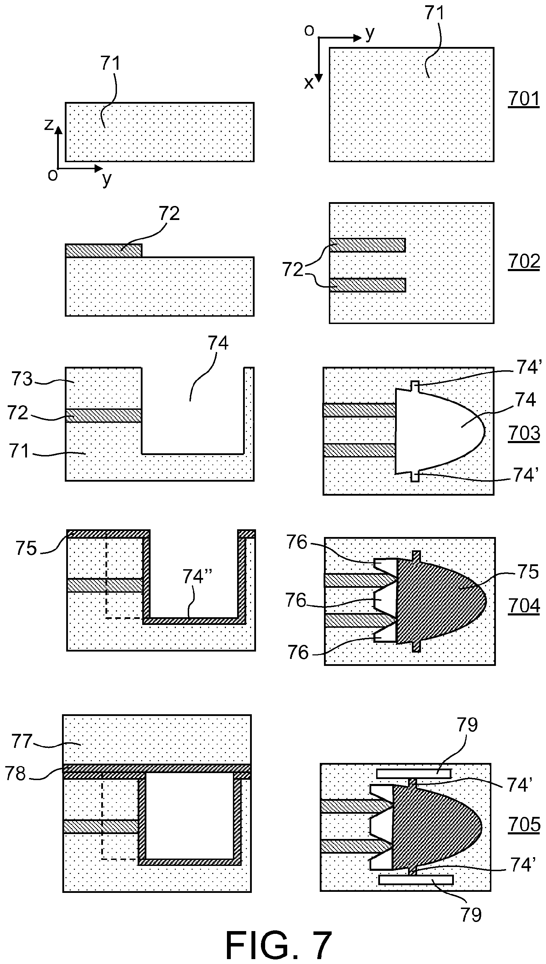

La figure 7 illustre de façon schématique un exemple de procédé de fabrication d'un dispositif optique selon l'invention.

Les figures à gauche représentent le dispositif en cours de réalisation, selon des vues en coupe dans un plan parallèle au plan (yOz) du repère défini ci-avant.

Les figures à droite représentent le dispositif en cours de réalisation, selon des vues en coupe dans un plan parallèle au plan (xOy) du repère défini ci-avant.

On part d'un substrat 71, ici un substrat en silicium (point de départ 701).

Dans une première étape 702, on dépose par épitaxie, sur le substrat 71, une couche en alliage de silicium et germanium, qu'on grave pour former deux rubans 72. Un ruban va former le guide d'onde d'injection, tandis que l'autre ruban va former le guide d'onde d'extraction. L'alliage comprend par exemple 40% de germanium.

Le substrat 71 et les rubans 72 sont ensuite recouverts d'une nouvelle couche de silicium 73, déposée par épitaxie. La couche de silicium 73 est avantageusement planarisée. Les rubans 73 sont ainsi encapsulés dans du silicium. On grave ensuite une cavité 74, à l'extrémité des deux rubans 72 (étape 703). La cavité 74 s'étend sur toute l'épaisseur de la nouvelle couche de silicium 73, et sur une partie de l'épaisseur du substrat 71. La cavité est représentée à droite selon une vue de dessus. Elle présente une section en forme de portion d'ellipse, et formera ensuite la cavité d'absorption selon l'invention. La cavité 74 présente également, de part et d'autre de son plan de symétrie, des ailettes 74'. Les ailettes dépassent à l'extérieur de la forme principale en ellipse de la cavité. Elles sont formées sur des régions latérales de la cavité, sur lesquelles le faisceau d'analyse mentionné ci-avant ne sera pas incident. Elles n'auront donc aucune influence sur le trajet du faisceau d'analyse dans la cavité d'absorption (raison pour laquelle elles ne sont pas mentionnées dans la description ci-avant).

Dans une étape 704, on dépose une fine couche d'or 75, qui recouvre notamment les parois intérieures de la cavité 74, et on grave des cavités secondaires 76 autour des rubans 72, du côté de la cavité, pour former des guides d'onde en pointe tels que décrits en référence à la figure 2. Il s'agit de préférence d'une gravure chimique. La gravure peut déborder notamment en amont des pointes, dans la cavité 74. La substance chimique d'attaque est adaptée pour que la fine couche d'or déposée sur la face inférieure 74" de la cavité, ne soit pas gravée.

Dans une dernière étape 705, on reporte au-dessus de la cavité 74 et des rubans 72, un empilement constitué d'un substrat 77 et une fine couche d'or 78, et on grave des évents 79. La fine couche d'or 78 est située du côté de la cavité 74, et en forme la paroi supérieure. On réalise ainsi la cavité d'absorption selon l'invention. Les évents 79 sont des ouvertures gravées à travers le substrat 77 et la fine couche d'or 78, au niveau des ailettes 74', pour permettre à un milieu environnant de pénétrer à l'intérieur de la cavité 74.

Le capteur biologique ou chimique selon l'invention forme par exemple un capteur de gaz, pour mesurer une concentration d'un gaz prédéterminé.

En variante, le capteur permet d'identifier un gaz présent dans la cavité, à partir des valeurs de longueurs d'onde absorbées dans la cavité.

Le capteur selon l'invention permet une mesure de concentration dans un milieu gazeux, ou dans un milieu liquide.

La mesure de concentration est avantageusement basée sur la loi de Beer-Lambert.

En variante, on peut mesurer une concentration de particules, la lumière diffusée par les particules étant déviée de sa trajectoire à l'intérieur de la cavité d'absorption. Bien que le phénomène mis en jeu soit la diffusion, et non l'absorption, cela se traduit également par une variation d'intensité lumineuse entre le faisceau d'analyse injecté dans la cavité d'absorption et le faisceau extrait par le guide d'onde d'extraction.

## Revendications

**1.** Dispositif optique (100 ; 100' ; 500 ; 600) pour un capteur chimique ou biologique, comprenant :

- une cavité d'absorption (110 ; 110' ; 510 ; 610), la cavité d'absorption présentant des parois internes réfléchissantes (111) et étant destinée à recevoir un milieu chimique ou biologique ;
- un guide d'onde dit d'injection (120 ; 120' ; 520 ; 620), s'étendant à l'extérieur de la cavité d'absorption et agencé pour l'injection d'un faisceau lumineux d'analyse (150) à l'intérieur de la cavité d'absorption ; et
- un guide d'onde dit d'extraction (130 ; 130' ; 530 ; 630), s'étendant à l'extérieur de la cavité d'absorption et agencé pour l'extraction d'un faisceau lumineux dit de mesure (160), provenant de l'intérieur de la cavité d'absorption et correspondant au faisceau lumineux d'analyse ayant transité dans la cavité d'absorption ;

**caractérisé en ce que** la cavité d'absorption (110 ; 110' ; 510 ; 610) présente une forme de cylindre droit, avec une base en forme de portion d'ellipse, **en ce qu'**une extrémité (121) du guide d'onde d'injection est disposée en un premier foyer (F1) de l'ellipse et une extrémité (131) du guide d'onde d'extraction est disposée en un second foyer (F2) de l'ellipse, et **en ce que** le cœur (123) du guide d'onde d'injection (120 ; 120' ; 520 ; 620) et le cœur du guide d'onde d'extraction (130 ; 130' ; 530 ; 630) présentent chacun une extrémité en forme de pointe, du côté de la cavité d'absorption, avec une hauteur constante dans un plan parallèle à la génératrice du cylindre droit et une section en forme de pointe dans des plans parallèles à la base du cylindre droit.

**2.** Dispositif (100 ; 100' ; 500 ; 600) selon la revendication 1, **caractérisé en ce que** le guide d'onde d'injection (120 ; 120' ; 520 ; 620) et le guide d'onde d'extraction (130 ; 130' ; 530 ; 630) présentent chacun :

- une gaine principale (124), présentant une extrémité affinée, du côté de la cavité d'absorption ;
- un cœur (123), présentant une extrémité en forme de pointe, du côté de la cavité d'absorption, qui dépasse hors de la gaine principale ; et
- une région d'adaptation (125), encadrant l'extrémité affinée de la gaine principale et l'extrémité en forme de pointe du cœur.

**3.** Dispositif (100 ; 100' ; 500 ; 600) selon la revendication 2, **caractérisé en ce que** chaque région d'adaptation (125) est formée par au moins une cavité secondaire, ouverte sur la cavité d'absorption (110; 110' ; 510 ; 610).

**4.** Dispositif (100'; 500; 600) selon l'une quelconque des revendications 1 à 3, **caractérisé en ce qu'**un axe central (126') du guide d'onde d'injection et un axe central (136') du guide d'onde d'extraction s'étendent chacun en ligne droite, inclinés chacun d'un angle respectif non nul ($\theta_1$ ; $-\theta_1$) relativement à un plan de symétrie (112') de la cavité d'absorption.

**5.** Dispositif (100' ; 500 ; 600) selon la revendication 4, **caractérisé en ce que** ledit angle non nul ($\theta_1$ ; $-\theta_1$) est sensiblement égal en valeur absolue à :

$$\theta_i = \sin^{-1}\left(\frac{n_c * \Delta x}{n_i * \sqrt{\Delta x^2 + b^2}}\right)$$

avec :

$n_c$ l'indice de réfraction à l'intérieur de la cavité d'absorption (110' ; 510 ; 610) ;
$n_i$ l'indice effectif du mode guidé dans le guide d'onde d'injection (120' ; 520; 620), respectivement le guide d'onde d'extraction (130' ; 530 ; 630), à l'extrémité dudit guide d'onde située du côté de la cavité d'absorption ;
$\Delta x$ la distance entre le centre dudit guide d'onde (120' ; 130' ; 520 ; 530 ; 620 ; 630), à son extrémité située du côté de la cavité d'absorption, et le centre (0e) de l'ellipse ; et
$b$ la distance entre le centre (0e) de l'ellipse et le fond de la cavité d'absorption, du côté opposé aux guides d'onde d'injection et extraction.

**6.** Dispositif (100 ; 100' ; 500 ; 600) selon l'une quelconque des revendications 1 à 5, **caractérisé en ce que** le guide d'onde d'injection (120 ; 120' ; 520 ; 620) et le guide d'onde d'extraction (130 ; 130' ; 530 ; 630) sont symétriques l'un de l'autre, relativement à un plan de symétrie (112') de la cavité d'absorption.

**7.** Dispositif (100 ; 100' ; 500 ; 600) selon l'une quelconque des revendications 1 à 6, **caractérisé en ce que** la distance entre les centres respectifs du guide d'onde d'injection (120; 120' ; 520; 620) et du guide d'onde d'extraction (130; 130' ; 530; 630), à leurs extrémités respectives situées du côté de la cavité d'absorption, est supérieure 5 $\mu$m.

**8.** Dispositif (100 ; 100' ; 500 ; 600) selon l'une quelconque des revendications 1 à 7, **caractérisé en ce que** les dimensions et indices de réfraction du guide d'onde d'injection (120 ; 120' ; 520 ; 620) et du guide d'onde d'extraction (130 ; 130' ; 530 ; 630), et la distance entre les centres respectifs du guide d'onde d'injection et du guide d'onde d'extraction, à leurs extrémités respectives situées du côté de la cavité d'absorption, sont adaptés pour qu'un mode guidé en sortie du guide d'onde d'injection n'interfère pas avec un mode guidé en entrée du guide d'onde d'extraction.

**9.** Dispositif (500 ; 600) selon l'une quelconque des revendications 1 à 8, **caractérisé en ce que** le guide d'onde d'injection (520 ; 620) et le guide d'onde d'extraction (530 ; 630) sont reliés entre eux par un guide d'onde dit de rebouclage (570 ; 670), le guide d'onde d'injection, le guide d'onde d'extraction et le guide d'onde de rebouclage étant formés ensemble d'un seul tenant.

**10.** Dispositif (500 ; 600) selon la revendication 9, **caractérisé en ce qu'**il comprend en outre un guide d'onde dit principal (580 ; 680), s'étendant parallèle à une tangente au guide d'onde de rebouclage (570 ; 670), pour le transfert du faisceau lumineux d'analyse du guide d'onde principal (580) vers le guide d'onde de rebouclage (570), et le transfert du faisceau lumineux de mesure du guide d'onde de rebouclage (570) vers le guide d'onde principal (580), par couplage évanescent.

**11.** Dispositif (600) selon la revendication 9 ou 10, **caractérisé en ce que** le guide d'onde de rebouclage (670) s'étend à l'arrière de la cavité d'absorption (610), du côté opposé à un côté recevant les extrémités respectives du guide d'onde d'injection (620) et du guide d'onde d'extraction (630).

**12.** Capteur chimique ou biologique (1000 ; 5000 ; 6000), **caractérisé en ce qu'**il comprend :

- un dispositif optique (100; 100'; 500; 600) selon l'une quelconque des revendications 1 à 11 ;
- une source lumineuse (1200; 5200; 6200), pour l'émission du faisceau lumineux d'analyse (150) ; et
- un photo-détecteur (1300 ; 5300 ; 6300), pour la réception du faisceau lumineux de mesure (160).

**Patentansprüche**

**1.** Optische Vorrichtung (100; 100'; 500, 600) für einen chemischen oder biologischen Sensor, enthaltend:

- einen Absorptionshohlraum (110; 110'; 510; 610), wobei der Absorptionshohlraum reflektierende Innenwände (111) aufweist und zur Aufnahme eines chemischen oder biologischen Mediums bestimmt ist;
- einen so genannten Einkopplungswellenleiter (120; 120'; 520; 620), der sich außerhalb des Absorptionshohlraums erstreckt und zur Einkopplung eines Analyselichtstrahls (150) in das Innere des Absorptionshohlraums angeordnet ist; und
- einen so genannten Auskopplungswellenleiter (130; 130'; 530; 630), der sich außerhalb des Absorptionshohlraums erstreckt und zur Auskopplung eines so genannten Messlichtstrahls (160) angeordnet ist, der aus dem Inneren des Absorptionshohlraums stammt und dem Analyselichtstrahl entspricht, der den Absorptionshohlraum durchlaufen hat;
**dadurch gekennzeichnet, dass**
der Absorptionshohlraum (110; 110'; 510; 610) die Form eines geraden Zylinders mit einer Basis in Form eines Ellipsenabschnitts hat, dass
ein Ende (121) des Einkopplungswellenleiters an einem ersten Brennpunkt (F1) der Ellipse und ein Ende (131) des Auskopplungswellenleiters an einem zweiten Brennpunkt (F2) der Ellipse angeordnet ist, und dass
der Kern (123) des Einkopplungswellenleiters (120; 120'; 520; 620) und der Kern des Auskopplungswellenleiters (130; 130'; 530; 630) auf der Seite des Absorptionshohlraums jeweils ein spitzenförmiges Ende mit einer konstanten Höhe in einer Ebene parallel zur Mantellinie des geraden Zylinders und einen spitzenförmigen Abschnitt in Ebenen parallel zur Basis des geraden Zylinders aufweisen.

**2.** Vorrichtung (100; 100'; 500, 600) nach Anspruch 1, **dadurch gekennzeichnet, dass** der Einkopplungswellenleiter (120; 120'; 520; 620) und der Auskopplungswellenleiter (130; 130'; 530; 630) jeweils aufweisen:

- einen Hauptmantel (124) mit einem sich verjüngenden Ende auf der Seite des Absorptionshohlraums;
- einen Kern (123) mit einem spitzenförmigen Ende auf der Seite des Absorptionshohlraums, das aus dem Hauptmantel herausragt; und
- einen Anpassungsbereich (125), der das sich verjüngende Ende des Hauptmantels und das spitzenförmige Ende des Kerns umgibt.

**3.** Vorrichtung (100; 100'; 500, 600) nach Anspruch 2, **dadurch gekennzeichnet, dass** jeder Anpassungsbereich (125) aus zumindest einem Nebenhohlraum gebildet ist, der zum Absorptionshohlraum (110; 110'; 510; 610) hin offen ist.

**4.** Vorrichtung (100'; 500, 600) nach einem der Ansprüche 1 bis 3, **dadurch gekennzeichnet, dass** eine Mittelachse (126') des Einkopplungswellenleiters und eine Mittelachse (136') des Auskopplungswellenleiters jeweils geradlinig verlaufen und jeweils um einen von Null verschiedenen Winkel ($\theta_1$; -$\theta_1$) relativ zu einer Symmetrieebene (112') des Absorptionshohlraums geneigt sind.

**5.** Vorrichtung (100'; 500, 600) nach Anspruch 4, **dadurch gekennzeichnet, dass**
der von Null verschiedene Winkel ($\theta_1$; -$\theta_1$) im Wesentlichen im absoluten Wert gleich

$$\theta_i = \sin^{-1}\left(\frac{n_c * \Delta x}{n_i * \sqrt{\Delta x^2 + b^2}}\right)$$

ist, mit:

$n_c$ Brechungsindex innerhalb des Absorptionshohlraums (110'; 510; 610);
$n_i$ effektiver Index der geführten Mode im Einkopplungswellenleiter (120'; 520; 620) bzw. im Auskopplungswellenleiter (130'; 530; 630) am Ende dieses Wellenleiters, das sich auf der Seite des Absorptionshohlraums befindet;
$\Delta x$ Abstand zwischen dem Zentrum dieses Wellenleiters (120'; 130'; 520; 530; 620; 630) an dessen Ende, das sich auf der Seite des Absorptionshohlraums befindet, und dem Mittelpunkt (0e) der Ellipse; und
b Abstand zwischen dem Mittelpunkt (0e) der Ellipse und dem Grund des Absorptionshohlraums, auf der dem Einkopplungs- und dem Auskopplungswellenleiter entgegengesetzten Seite.

6. Vorrichtung (100; 100'; 500, 600) nach einem der Ansprüche 1 bis 5, **dadurch gekennzeichnet, dass** der Einkopplungswellenleiter (120; 120'; 520; 620) und der Auskopplungswellenleiter (130; 130'; 530; 630) bezüglich einer Symmetrieebene (112') des Absorptionshohlraums symmetrisch zueinander verlaufen.

7. Vorrichtung (100; 100'; 500, 600) nach einem der Ansprüche 1 bis 6, **dadurch gekennzeichnet, dass** der Abstand zwischen den jeweiligen Zentren des Einkopplungswellenleiters (120; 120'; 520; 620) und des Auskopplungswellenleiters (130; 130'; 530; 630) an ihren jeweiligen Enden auf der Seite des Absorptionshohlraums größer als 5 μm ist.

8. Vorrichtung (100; 100'; 500, 600) nach einem der Ansprüche 1 bis 7, **dadurch gekennzeichnet, dass** die Abmessungen und die Brechungsindizes des Einkopplungswellenleiters (120; 120'; 520; 620) und des Auskopplungswellenleiters (130; 130'; 530; 630) und der Abstand zwischen den jeweiligen Zentren des Einkopplungswellenleiters und des Auskopplungswellenleiters an ihren jeweiligen Enden auf der Seite des Absorptionshohlraums so angepasst sind, dass eine geführte Mode am Austritt des Einkopplungswellenleiters nicht mit einer geführten Mode am Eintritt des Auskopplungswellenleiters interferiert.

9. Vorrichtung (500, 600) nach einem der Ansprüche 1 bis 8, **dadurch gekennzeichnet, dass** der Einkopplungswellenleiter (520; 620) und der Auskopplungswellenleiter (530; 630) durch einen sogenannten Schleifenwellenleiter (570; 670) miteinander verbunden sind, wobei der Einkopplungswellenleiter, der Auskopplungswellenleiter und der Schleifenwellenleiter aus einem Stück miteinander ausgebildet sind.

10. Vorrichtung (500, 600) nach Anspruch 9, **dadurch gekennzeichnet, dass** sie ferner einen so genannten Hauptwellenleiter (580; 680) enthält, der parallel zu einer Tangente zum Schleifenwellenleiter (570; 670) verläuft, um den Analyselichtstrahl vom Hauptwellenleiter (580) in den Schleifenwellenleiter (570) und den Messlichtstrahl vom Schleifenwellenleiter (570) in den Hauptwellenleiter (580) durch evaneszente Kopplung zu übertragen.

11. Vorrichtung (600) nach der Anspruch 9 oder 10, **dadurch gekennzeichnet, dass** der Schleifenwellenleiter (670) sich hinter dem Absorptionshohlraum (610) auf der Seite erstreckt, die einer die jeweiligen Enden des Einkopplungswellenleiters (620) und des Auskopplungswellenleiters aufnehmenden Seite entgegengesetzt ist.

12. Chemischer bzw. biologischer Sensor (1000; 5000; 6000), **dadurch gekennzeichnet, dass** er enthält:

    - eine optische Vorrichtung (100; 100'; 500; 600) nach einem der Ansprüche 1 bis 11;
    - eine Lichtquelle (1200; 5200; 6200) zum Emittieren des Analyselichtstrahls (150); und
    - einen Photodetektor (1300; 5300; 6300) zum Empfangen des Messlichtstrahls (160).

**Claims**

1. An optical device (100; 100'; 500; 600) for a chemical or biological sensor, comprising:

- an absorption cavity (110; 110'; 510; 610), the absorption cavity having reflecting inner walls (111) and being for receiving a chemical or biological medium;
- a so-called injection waveguide (120; 120'; 520; 620), extending outside the absorption cavity and arranged for injecting an analysis light beam (150) inside the absorption cavity; and
- a so-called extraction waveguide (130; 130'; 530; 630), extending outside the absorption cavity and arranged for extracting a so-called measuring light beam (160), coming from inside the absorption cavity and corresponding to the analysis light beam having passed through the absorption cavity;

**characterised in that** the absorption cavity (110; 110'; 510; 610) has a straight cylinder shape, with an ellipse portion-shaped base, **in that** an end (121) of the injection waveguide is disposed at a first focus (F1) of the ellipse and an end (131) of the extraction waveguide is disposed at a second focus (F2) of the ellipse, and **in that** the core (123) of the injection waveguide (120; 120'; 520; 620) and the core of the extraction waveguide (130; 130'; 530; 630) each have a tip-shaped end, on the absorption cavity side, with a constant height along a plane parallel to the generatrix of the straight cylinder and a tip-shaped cross-section in planes parallel to the base of the straight cylinder.

2. The device (100; 100'; 500; 600) according to claim 1, **characterised in that** the injection waveguide (120; 120'; 520; 620) and the extraction waveguide (130; 130'; 530; 630) each have:

- a main cladding (124), having a thinned end, on the absorption cavity side;
- a core (123), having a tip-shaped end, on the absorption cavity side, which projects out of the main cladding; and
- a matching region (125), framing the thinned end of the main cladding and the tip-shaped end of the core.

3. The device (100; 100'; 500; 600) according to claim 2, **characterised in that** each matching region (125) is formed by at least one secondary cavity, opening onto the absorption cavity (110; 110'; 510; 610).

4. The device (100'; 500; 600) according to any of claims 1 to 3, **characterised in that** a centre axis (126') of the injection waveguide and a centre axis (136') of the extraction waveguide each extend in a straight line, each tilted by a respective non-zero angle ($\theta_1$; $-\theta_1$) relative to a plane of symmetry (112') of the absorption cavity.

5. The device (100'; 500; 600) according to claim 4, **characterised in that** said non-zero angle ($\theta_1$; $-\theta_1$) is substantially equal in absolute value to:

$$\theta_i = \sin^{-1}\left(\frac{n_c * \Delta x}{n_i * \sqrt{\Delta x^2 + b^2}}\right)$$

with:

$n_c$ the refractive index inside the absorption cavity (110'; 510; 610);
$n_i$ the effective index of the guided mode in the injection waveguide (120'; 520; 620), respectively the extraction waveguide (130'; 530; 630), at the end of said waveguide located on the absorption cavity side;
$\Delta x$ the distance between the centre of said waveguide (120'; 130'; 520; 530; 620; 630), at its end located on the absorption cavity side, and the centre (O$e$) of the ellipse; and
$b$ the distance between the centre (O$e$) of the ellipse and the bottom of the absorption cavity, on the side opposite to the injection and extraction waveguides.

6. The device (100; 100'; 500; 600) according to any of claims 1 to 5, **characterised in that** the injection waveguide (120; 120'; 520; 620) and the extraction waveguide (130; 130'; 530; 630) are symmetrical to each other, relative to a plane of symmetry (112') of the absorption cavity.

7. The device (100; 100'; 500; 600) according to any of claims 1 to 6, **characterised in that** the distance between the respective centres of the injection waveguide (120; 120'; 520; 620) and the extraction waveguide (130; 130'; 530; 630), at their respective ends located on the absorption cavity side, is greater than 5$\mu$m.

8. The device (100; 100'; 500; 600) according to any of claims 1 to 7, **characterised in that** the dimensions and refractive indices of the injection waveguide (120; 120'; 520; 620) and the extraction waveguide (130; 130'; 530; 630), and the distance between the respective centres of the injection waveguide and the extraction waveguide, at their respective ends located on the absorption cavity side, are adapted so that a guided mode at the output from the injection waveguide does not interfere with a guided mode input at the to the extraction waveguide.

9. The device (500; 600) according to any of claims 1 to 8, **characterised in that** the injection waveguide (520; 620) and the extraction waveguide (530; 630) are connected to each other by a so-called feedback waveguide (570; 670), the injection waveguide, the extraction waveguide and the feedback waveguide being formed integrally together.

10. The device (500; 600) according to claim 9, **characterised in that** it further comprises a so-called main waveguide (580; 680), extending parallel to a tangent to the feedback waveguide (570; 670), for transferring the analysis light beam from the main waveguide (580) to the feedback waveguide (570), and transferring the measuring light beam from the feedback waveguide (570) to the main waveguide (580), by evanescent coupling.

11. The device (600) according to claim 9 or 10, **characterised in that** the feedback waveguide (670) extends backwardly of the absorption cavity (610), on the opposite side to a side receiving the respective ends of the injection waveguide (620) and the extraction waveguide (630).

12. A chemical or biological sensor (1000; 5000; 6000), **characterised in that** it comprises:

    - an optical device (100; 100'; 500; 600) according to any of claims 1 to 11;
    - a light source (1200; 5200; 6200), for emitting the analysis light beam (150); and
    - a photo-detector (1300; 5300; 6300), for receiving the measuring light beam (160).

FIG. 1A

FIG. 1B

FIG. 2

FIG. 3A

FIG. 3B

FIG. 4

FIG. 5

FIG. 6

FIG. 7

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- EP 2891876 A
- JP S63304137 A
- DE 102004010757
- FR 2974423